# EUROPÄISCHE PATENTANMELDUNG

(11) **EP 1 605 679 A2**
(43) Veröffentlichungstag der Anmeldung: **14.12.2005**
(21) Anmeldenummer: 05090132.1
(22) Anmeldetag: 10.05.2005
(51) Int. Cl.: H04N 1/028

(54) **Vorrichtung zur Digitalisierung von Filmmaterial**

(30) Priorität: 10.06.2004 DE 102004028143
(71) Anmelder: Deutsches Zentrum für Luft- und Raumfahrt e.V., 53175 Bonn (DE)
(72) Erfinder: Walter, Ingo, 12847 Berlin (DE); Zender, Bernd, 13088 Berlin (DE)
(74) Vertreter: Effert, Bressel und Kollegen

(57) **Zusammenfassung**

Die Erfindung betrifft eine Vorrichtung zur Digitalisierung von Filmmaterial, umfassend eine Einrichtung zum Filmtransport, mindestens einen photosensitiven Sensor und mindestens eine Lichtquelle zum Beleuchten des Filmmaterials, wobei die Einrichtung zum Filmtransport mindestens eine Filmbühne umfasst, wobei die Filmbühne mindestens einen Lichtdurchlass aufweist, wobei die Lichtquelle von der Unterseite der Filmbühne den mindestens einen Lichtdurchlass ausstattet und über die Oberseite der Filmbühne das Filmmaterial geführt wird, wobei die Lichtquelle (1) aus Licht-Emitter-Dioden (3) ausgebildet ist, die in einem gewünschten Spektralbereich emittieren, wobei die Licht-Emitter-Dioden (3) in Form von Halbleiter-Chips zu einer gewünschten geometrischen Form zusammengestellt sind, wobei die Halbleiter-Chips direkt oder über einen Chipträger (4) mit mindestens einer Wärmesenke bzw. einem Kühlkörper (2) verbunden sind.

## Beschreibung

Die Erfindung betrifft eine Vorrichtung zur Digitalisierung von Filmmaterial gemäß dem Oberbegriff des Anspruchs 1.

Im Gerätebau werden zur Digitalisierung von Kinofilmen Filmscanner eingesetzt. In diesen Einrichtungen gelangt das Licht von der Beleuchtungseinrichtung über einen Diffusor auf die Filmbühne. Der dort am Beleuchtungsfenster vorbeigeführte Film wird durchleuchtet. Die entstehende Helligkeitsmodulation wird über eine Abbildungsoptik im Kamerakopf auf die optischen Sensoren abgebildet und in Abhängigkeit vom Transportprinzip (kontinuierlicher Filmtransport oder diskontinuierlicher Filmtransport) als Bildinformation zeilen- oder bildweise in elektrische Signale umgewandelt. Ein wegen ihrer Effektivität gebräuchliches Verfahren ist, dass der Film von einem linienförmigen CCD-Empfänger abgetastet wird, während der Film sich kontinuierlich über die Bildaufnahmeebene bewegt. Eine derartige Vorrichtung ist beispielsweise aus der DE 102 40 348 B3 bekannt.

Eine besondere Problematik besteht dabei in der Wärmeentwicklung durch die Beleuchtung im Betrieb oder bei Filmstillstand, da verfahrensbedingt hohe Leuchtdichten in der Filmbühne erzeugt werden müssen, um detailgetreue und farbreine Kopien zu erzeugen. Dies ist insbesondere beim Scannen alter Filmmaterialien auf der Basis von Zelluloid (Nitrofilm) mit einer Selbstentzündungstemperatur bei ca. 36°C ein Problem.

Als Lichtquelle in der Beleuchtungseinrichtung werden verbreitet Halogenlampen bzw. überwiegend Gasentladungslampen hoher Leistung (bis 700 W) eingesetzt. Deren kreisförmiger Lichtaustritt wird über Reflektoren- und Linsensysteme auf das geometrisch rechteckige bzw. linienförmige Format der Beleuchtungsfläche in der Filmbühne geformt.

Um die Wärmeentwicklung der Lampen örtlich von der Filmbühne fernzuhalten, besteht ein weiteres Verfahren der Lichtstrahlformung darin, das Licht in ein Ende eines wärmefesten Glasfaserbündels einzukoppeln und das andere Ende mittels Querschnittswandler in die gewünschte Leuchtgeometrie zu bringen.

Generell ist der Einsatz von Halogen- oder Gasentladungslampen durch folgende Randbedingungen gekennzeichnet:
- Durch den hohen Anteil an Strahlungswärme im Emissionsspektrum ist die Einbringung von Wärmeschutzfiltern in den Strahlengang notwendig.
- Die Leuchtgeometrie der Lichtquelle ist im Betrieb nicht veränderbar.
- Gasentladungslampen unterliegen einer starken Degradation, die mittlere Betriebsdauer beträgt < 2.000 h. Halogenlampen haben eine mittlere Betriebsdauer von ca. < 100 h.
- Für den Betrieb von Gasentladungslampen ist eine kostenaufwendige Stromversorgung mit Hochspannungszünder erforderlich.
- Gasentladungslampen sind nur in Vorzugslage betreibbar (horizontal oder vertikal).
- Lichtschwankungen von ca. 10% durch Schwankungen im Plasmabogen von Gasentladungslampen sind nicht vollständig kompensierbar (light noise).
- Farblichtspektren zum Scannen von schwarz/weiß-Filmen lassen sich nur durch Befilterung aus dem Gesamtspektrum separieren, die restliche Strahlung wird in Wärme umgesetzt.
- Die Brennpunktjustage des Plamabogens bei Gasentladungslampen ist aufgrund von Elektrodenabnutzung zyklisch durchzuführen.

Alternativ sind durch die Fortschritte in der Halbleitertechnologie Lumineszenzemissionsdioden (LED) großer Fläche und großer Leuchtdichte für Beleuchtungszwecke verfügbar. Diese LEDs sind in rechteckiger oder polygoner Chipform mit jeweils unterschiedlichen Farben zu Anordnungen beliebiger Geometrie kombinierbar.

Die Beleuchtung mit LED ist durch eine hohe Lichtausbeute, und damit einer geringen Verlustwärmeentwicklung, gekennzeichnet, bei gleichzeitig hoher Lebensdauer (bis 100.000 h) und Stabilität.

Derzeit angewendete Lösungen nutzen konfektionierte LED als diskrete Bauelemente, die mittels gedruckter Schaltungen entsprechend der jeweiligen Anwendung angeordnet zum Einsatz gebracht werden. Da die effektive Lichtleistung durch die Chipfläche und dessen Temperatur begrenzt wird, sind Beleuchtungseinrichtungen in dieser Ausführung auf geringe Leistungen in Laborumgebungen und ähnlichen Anwendungen beschränkt.

Der Erfindung liegt daher das technische Problem zugrunde, eine Vorrichtung zur Digitalisierung von Filmmaterial zu schaffen, bei der bei ausreichender Lichtleistung der Wärmeeintrag in den Film minimiert wird.

Die Lösung des technischen Problems ergibt sich durch den Gegenstand mit den Merkmalen des Anspruchs 1. Weitere vorteilhafte Ausgestaltungen ergeben sich aus den Unteransprüchen.

Hierzu ist die Lichtquelle aus Licht-Emitter-Dioden LED zusammengesetzt, die in einem gewünschten Spektralbereich emittieren, wobei die Licht-Emitter-Dioden in Form von Halbleiter-Chips zu einer gewünschten Form zusammengestellt sind, wobei die Halbleiter-Chips direkt oder über einen Chipträger mit einer Wärmesenke verbunden sind.

Zur Abführung der auf den Chips entstehenden Verlustleistung werden diese entweder mittels einer Positionierungsmaske direkt oder über einen gut wärmeleitfähigen Chipträger mit geeignetem Wärmeausdehnungskoeffizienten auf der Wärmesenke durch Klebung oder Lötung mit geringem Wärmeübergangswiderstand befestigt. Die Wärmesenke ist vorzugsweise kühlbar ausgeführt. Die Kühlung kann dabei beispielsweise mittels Flüssigkeitskühlung und/oder Wärmerohren erfolgen. Durch die direkte Zusammenstellung der Halbleiter-Chips können entsprechend große Flächen mit hoher Lichtleistung erzeugt werden, wobei der Wärmeeintrag in das Filmmaterial gering ist, da keine unerwünschten Spektralanteile emittiert werden. Die dabei auftretenden großen elektronischen Verlustleistungen in den Chips werden dann über die Wärmesenke abgeführt.

Vorzugsweise emittieren die Licht-Emitter-Dioden mindestens im R-, G- und B-Spektrum, so dass auch farbige Aufnahmen digitalisiert werden. Hinsichtlich der Kombination sind, je nach Ausführungsform der Vorrichtung, verschiedene Anwendungen denkbar. Vorzugsweise werden jedoch die Licht-Emitter-Dioden für die verschiedenen Spektralbereiche auf getrennten Wärmesenken angeordnet. Für farbige Aufnahmen ist dann beispielsweise die Filmbühne mit drei spaltenförmigen Lichtdurchlässen ausgebildet, wobei die Licht-Emitter-Dioden eines Spektralbereiches jeweils einen Lichtdurchlass ausleuchten. Es sind jedoch auch gemischte Aufbauten denkbar, beispielsweise um für schwarz/weiß-Aufnahmen weißes Licht zu erzeugen.

In einer weiteren bevorzugten Ausführungsform ist die Wärmesenke als gekühlter Kupferblock ausgebildet. Dabei ist vorzugsweise der Kupferblock geschlitzt ausgebildet. Dies vermindert die auftretenden Wärmespannungen durch unterschiedliche Wärmeausdehnungskoeffizienten von Kupfer und dem Substratmaterial (z. B. Silizium).

In einer weiteren bevorzugten Ausführungsform sind die Licht-Emitter-Dioden einzeln und/oder abschnittsweise ansteuerbar, wobei hierzu den einzelnen Licht-Emitter-Dioden steuerbare Stromquellen zugeordnet sind. Durch die elektronische Steuerung der LEDs sind beispielsweise längs der Zeilenanordnung durch Wahl des Betriebsstromes der LED-Chips beliebige Helligkeitsprofile einstellbar, da bei LEDs die Lichtleistung proportional zum Strom ist. Diese können zur Kompensation von Helligkeitsprofilen im Target oder von Helligkeitsprofilen beim Durchgang durch nachfolgende optische Einrichtungen genutzt werden.

In einer weiteren bevorzugten Ausführungsform sind die einzelnen Licht-Emitter-Dioden rechteckförmig oder wabenförmig ausgebildet. In einer weiteren bevorzugten Ausführungsform sind die Einzel-LEDs linienförmig angeordnet und können, je nach Anforderung an die Lichthomogenität, ein-, mehrzeilig oder mehrzeilig gestaggert ausgeführt sein.

In einer weiteren bevorzugten Ausführungsform ist den Licht-Emitter-Dioden mindestens eine Auskoppeloptik zugeordnet, die mit den Licht-Emitter-Dioden und/oder dem Chipträger und /oder der Wärmesenke verbunden ist und wärmetechnisch an die thermalen Belastungen der Chipanordnung angepasst ist. Diese Auskoppeloptik gewährleistet gleichzeitig den Schutz der elektrischen Kontakte, die über Einfach- der Mehrfachbondungen an der LED-Anordnung zu einem nachgeordneten Verdrahtungsträger angebracht werden.

Die angepasste Auskoppeloptik besteht dabei vorzugsweise aus einer Halbzylinderlinse. Zur Sicherung der Kompatibilität mit der Bondgeometrie und der Wärmeentwicklung auf den LED-Chips besteht diese Halbzylinderlinse vorzugsweise aus einem Halbrohr, dessen Kavität mit einem transparenten Silikon gleicher Brechzahl semielastisch ausgefüllt ist.

In einer speziellen Ausführungsform kann der Hohlstab durch entsprechende Oberflächenrauigkeit als Diffusor ausgeführt sein, wobei die Aufrauung innerhalb und/oder außerhalb der Kavität sein kann.

Die Vorteile der Lösung lassen sich wie folgt zusammenfassen:
- LEDs besitzen keinen signifikanten Anteil an Wärmestrahlung im Emissionsspektrum, d. h., der Wärmeeintrag durch Strahlungswärme in die Filmbühne bzw. das Filmmaterial kann vernachlässigt werden. Die frei werdende Verlustleistung wird direkt über Wärmeleitungen an eine Wärmesenke abgeführt.
- Das Spektrum der Beleuchtungseinrichtung ist durch Wahl der mittleren Emissionswellenlänge der LEDs und/oder Kombination von LEDs verschiedener Emissionswellenlängen frei kombinierbar bzw. einstellbar.
- Die Leuchtgeometrie der Lichtquelle ist durch Einzelansteuerung unterschiedlicher LEDs veränderbar.
- Helligkeitsverteilungen sind über unterschiedliche Ansteuerung der Einzel-LEDs wählbar.
- Die mittlere Betriebszeit von LEDs im Bereich > 10.000 h übersteigt wesentlich die von Gasentladungslampen.
- Es existiert keine Vorzugseinbaulage.
- Es sind keine Nachjustierungen infolge Elektrodenverschleiß erforderlich.
- LEDs können ausschließlich mit Niederspannung betrieben werden.
- Die vorgeschlagene Lösung ist leicht mittels Mikroprozessorsteuerung der LED-Stromquellen in automatisierte Prozessabläufe integrierbar.
- Die Stabilität der Lichtstärke hängt ausschließlich von der verwendeten Qualität der Stromversorgung ab.

Die Erfindung wird nachfolgend anhand eines bevorzugten Ausführungsbeispiels näher erläutert. Die Fig. zeigen:

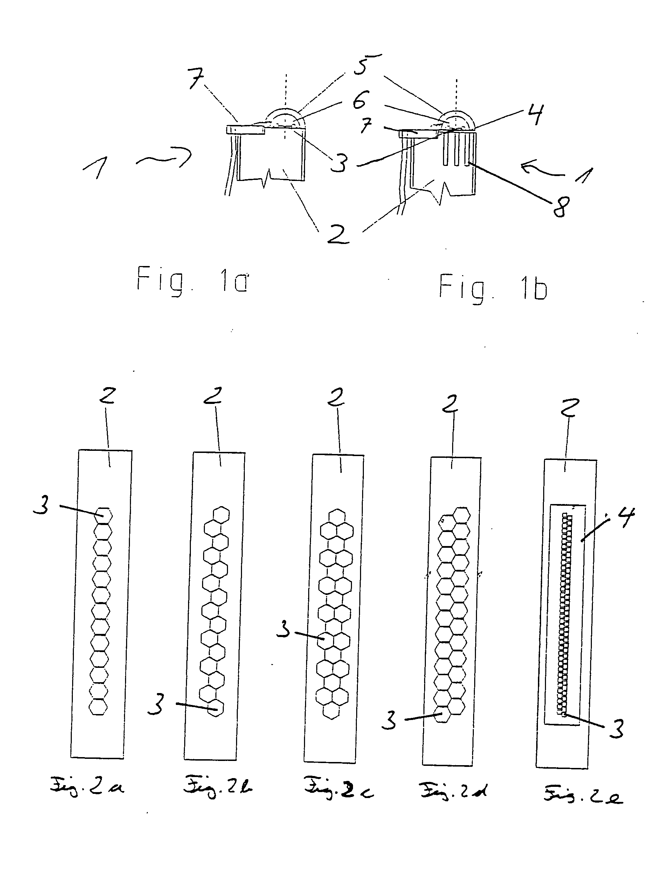

- Fig. 1a: eine schematische Darstellung einer ersten Ausführungsform einer Lichtquelle für eine Vorrichtung zur Digitalisierung von Filmmaterial im Querschnitt,
- Fig. 1 b: eine zweite Ausführungsform der Lichtquelle im Querschnitt und
- Fig. 2a - e: verschiedene geometrische Anordnungen von LED-Chips auf einer Wärmesenke in einer Draufsicht.

Die Lichtquelle 1 einer Vorrichtung zur Digitalisierung von Lichtmaterial umfasst mindestens einen Kühlkörper 2, der vorzugsweise als Kupferblock ausgebildet ist. Auf dem Kühlkörper 2 sind LED-Chips 3 direkt (Fig. 1 a) oder über einen Chipträger 4 (Fig. 1 b) aufgebracht, wobei der Chipträger 4 vorzugsweise aus Silizium ausgebildet ist.

Die LED-Chips 3 sind mit einer Halbrohranordnung 5 und einer Silikonfüllung 6 komplettiert. Die elektrischen Anschlüsse der Beleuchtungseinrichtung werden über einen Verdrahtungsträger 7 ausgeführt.

Die Ausführungsform gemäß Fig. 1 a lässt höhere Lichtleistungen zu durch direkten Kontakt der Chips auf der Wärmesenke, die Zahl der LEDs ist allerdings durch die bondtechnischen Möglichkeiten in ihrer Anzahl begrenzt.

Die Ausführungsform gemäß Fig. 1 b mit Si-Chipträgern lässt eine hohe LED-Dichte und Homogenität zu, allerdings ist die thermische Belastungsfähigkeit durch den längeren Wärmeleitungsweg geringer. Die auftretenden Wärmespannungen durch unterschiedliche Wärmeausdehnungskoeffizienten von Silizium und Wärmesenke werden durch eine spezielle Schlitzstruktur 8 im Kupferblock gemindert.

In den Fig. 2 a - e sind verschiedene Geometrien für die LED-Chips 3 dargestellt, wobei in Fig. 2a eine zeilenförmige Anordnung mit wabenförmigen LED-Chips 3, in Fig. 2b eine alternierende Anordnung, in Fig. 2c eine wabenförmige Anordnung und in Fig. 2d eine gestaggerte Anordnung gezeigt ist. In Fig. 2e ist eine gestaggerte Anordnung mit rechteckförmigen LED-Chips 3 mit Chipträger 4 dargestellt. Die Geometrien gemäß der Fig. 2a - d werden dabei vorzugsweise bei Ausführungsformen gemäß Fig. 1 a und die Geometrie gemäß Fig. 2e wird vorzugsweise bei Ausführungsformen gemäß Fig. 1 b verwendet.

Dabei kann um die Lichtquelle 1 mittels verschiedener bestückter Kühlkörper 2 zusammengesetzt werden. So wird beispielsweise ein Kühlkörper 2 mit roten, ein zweiter Kühlkörper 2 mit grünen und ein dritter Kühlkörper 2 mit blauen LEDs bestückt. Des Weiteren kann ein vierter Kühlköper 2 mit NIR-LEDs 3 bestückt werden, um beispielsweise Kratzer oder Perforationslöcher zu detektieren.

## Patentansprüche

1. Vorrichtung zur Digitalisierung von Filmmaterial, umfassend eine Einrichtung zum Filmtransport, mindestens einen photosensitiven Sensor und mindestens eine Lichtquelle zum Beleuchten des Filmmaterials, wobei die Einrichtung zum Filmtransport mindestens eine Filmbühne umfasst, wobei die Filmbühne mindestens einen Lichtdurchlass aufweist, wobei die Lichtquelle von der Unterseite der Filmbühne den mindestens einen Lichtdurchlass ausleuchtet und über die Oberseite der Filmbühne das Filmmaterial geführt wird,
**dadurch gekennzeichnet, dass**
die Lichtquelle (1) aus Licht-Emitter-Dioden (3) ausgebildet ist, die in einem gewünschten Spektralbereich emittieren, wobei die Licht-Emitter-Dioden (3) in Form von Halbleiter-Chips zu einer gewünschten geometrischen Form zusammengestellt sind, wobei die Halbleiter-Chips direkt oder über einen Chipträger (4) mit mindestens einer Wärmesenke bzw. einem Kühlkörper (2) verbunden sind.

2. Vorrichtung nach Anspruch 1, **dadurch gekennzeichnet, dass** Licht-Emitter-Dioden (3) mindestens im R-, G- und B-Spektrum emittieren.

3. Vorrichtung nach Anspruch 1 oder 2, **dadurch gekennzeichnet, dass** die Wärmesenke als gekühlter Kupferblock ausgebildet ist.

4. Vorrichtung nach Anspruch 3, **dadurch gekennzeichnet, dass** der Kupferblock geschlitzt ausgebildet ist.

5. Vorrichtung nach einem der vorangegangenen Ansprüche, **dadurch gekennzeichnet, dass** die Licht-Emitter-Dioden (3) einzeln und/oder abschnittsweise ansteuerbar sind.

6. Vorrichtung nach einem der vorangegangenen Ansprüche, **dadurch gekennzeichnet, dass** die einzelnen Licht-Emitter-Dioden (3) rechteckförmig oder wabenförmig ausgebildet sind.

7. Vorrichtung nach einem der vorangegangenen Ansprüche, **dadurch gekennzeichnet, dass** den Licht-Emitter-Dioden (3) mindestens eine Auskoppeloptik zugeordnet ist, die mit den Licht-Emitter-Dioden (3) und/oder dem Chipträger (4) und/oder der Wärmesenke verbunden ist.

8. Vorrichtung nach Anspruch 7, **dadurch gekennzeichnet, dass** die Auskoppeloptik als Halbzylinderlinse ausgebildet ist.

9. Vorrichtung nach Anspruch 8, **dadurch gekennzeichnet, dass** die Zylinderlinse als transparentes Halbrohr (5) ausgebildet ist, dessen Kavität mit einem transparenten Silikon (6) gleicher Brechzahl ausgebildet ist.

10. Vorrichtung nach Anspruch 9, **dadurch gekennzeichnet, dass** die Oberfläche des transparenten Halbrohrs (5) aufgeraut ist.
